# EUROPÄISCHE PATENTSCHRIFT

(11) **EP 4 214 098 B1**
(45) Veröffentlichungstag und Bekanntmachung des Hinweises auf die Patenterteilung: **28.02.2024**
(21) Anmeldenummer: 22802991.4
(22) Anmeldetag: 19.10.2022
(51) Int. Cl.: B60T 7/10, B60T 11/16, B60T 11/30, B60T 17/22, B62K 23/06, B62L 3/02, F16D 48/02, F16D 125/16

(54) **HYDRAULIKARMATUR**
HYDRAULIC FITTING
ARMATURE HYDRAULIQUE

(30) Priorität: 28.10.2021 DE 102021128118
(43) Veröffentlichungstag der Anmeldung: 26.07.2023
(73) Patentinhaber: Fahrwerker GmbH, 72555 Metzingen (DE)
(72) Erfinder: NEUTSCH, Christian, 18439 Stralsund (DE)
(74) Vertreter: Glawe, Delfs, Moll
(86) Internationale Anmeldenummer: PCT/EP2022/079036
(87) Internationale Veröffentlichungsnummer: WO 2023/072695

(56) Entgegenhaltungen:
- EP-B1- 1 795 419
- US-B2- 9 156 522

## Beschreibung

### Technisches Gebiet

Die vorliegende Erfindung betrifft eine Hydraulikarmatur und insbesondere eine Hydraulikarmatur für offene oder geschlossene Hydrauliksysteme, wie sie insbesondere bei lenkergeführten Fahrzeugen wie Fahrrädern, Motorrädern u.dgl. im Zusammenhang mit bspw. Brems- oder Kupplungssystemen Verwendung finden.

### Beschreibung des Standes der Technik

Gattungsgemäße Hydraulikarmaturen für Hydrauliksysteme und insbesondere für Hydraulikbremssysteme sind aus dem Stand der Technik bekannt und umfassen typischerweise ein Gehäuse, in dem eine Zylinderbohrung mit einem darin geführten Kolben ausgebildet ist. In der Zylinderbohrung befindet sich ein Hydraulikfluid, das durch Betätigung des Kolbens druckbeaufschlagt einer angeschlossenen Hydraulikleitung zugeführt wird. Die Zylinderbohrung steht in der Regel mit einem ebenfalls in dem Gehäuse ausgebildeten Fluidreservoir in Fluidverbindung, um im Bedarfsfall (z.B. bei zunehmender Abnutzung der Bremsbeläge) von dort mit weiterem Fluid versorgt zu werden. Zum Entfernen von unerwünscht in das Hydrauliksystem eingedrungener Luft sind in der Regel Entlüftungsöffnungen vorgesehen. Zudem sind aus dem Stand der Technik unterschiedliche Ansätze bekannt, um dem Eindringen unerwünschter Luft entgegenzuwirken. Eine gattungsgemäße Hydraulikarmatur ohne Fluidreservoir ist bspw. aus der EP 2 484 569 A1 bekannt.

Die EP 1 795 419 B1 offenbart eine Hydraulikarmatur für ein Hydraulikgebersystem mit den Merkmalen des Oberbegriffs des Anspruchs 1.

Die US 9 156 522 B2 offenbart eine weitere Hydraulikarmatur mit einer Entlüftungsbohrung und einer zusätzlichen Fluidverbindung zwischen dem Druckraum und dem Fluidreservoir, die während des Betriebs offen ist.

### Zusammenfassung der Erfindung

Ausgehend hiervon wird erfindungsgemäß eine Hydraulikarmatur mit den Merkmalen des Anspruchs 1 sowie ein Hydraulikgebersystem mit den Merkmalen des Anspruchs 11 vorgeschlagen.

Der Kerngedanke der Erfindung liegt darin begründet, eine zusätzliche Schnellentlüftungsmöglichkeit vorzusehen. Erzielt wird dies durch eine weitere Fluidverbindung zwischen einem Druckraum der Hydraulikarmatur und deren Fluidreservoir, die während des Betriebs unterbrochen und in einer Schnellentlüftungsstellung temporär freigebbar ist.

Die Fluidverbindung kann durch eine Verbindungspassage zwischen dem Druckraum und dem Fluidreservoir bereitgestellt werden. Zum Verschließen ist ein Verschlusselement vorgesehen. Das Verschlusselement ist insbesondere von außen betätigbar, bspw. zwischen mindestens einer die Verbindungspassage im Betrieb verschließenden ersten Stellung und einer die Verbindungspassage zur Schnellentlüftung freigebenden zweiten Stellung. Das Verschlusselement kann ein zwischen mindestens zwei Positionen verstellbarer Raststift, eine Stellschraube, o.dgl. sein.

Die Verbindungspassage kann derart angeordnet sein, dass die Funktion des Verschlusselements durch ein ohnehin vorhandenes Verschlussglied zum Verschließen einer zu Zwecken der Entlüftung vorgesehenen Entlüftungsbohrung übernommen wird. Diese Variante kann sowohl bei einer direkten Verbindung von Fluidreservoir und Druckraum durch die Verbindungspassage als auch bei einer indirekten Verbindung bspw. über die Entlüftungsbohrung, bei der die Verbindungspassage von dem Fluidreservoir in die Entlüftungsbohrung mündet, Anwendung finden. Das Verschlussglied der Entlüftungsbohrung ist dann entsprechend zwischen einer Schließstellung, in der sowohl die Entlüftungsbohrung als auch die Verbindungspassage geschlossen sind, einer Zwischenstellung, in der die Verbindungspassage freigegeben ist, ohne dass die Entlüftungsbohrung eine Verbindung zur Gehäuseumgebung hat, und einer Offenstellung, die eine Verbindung des Druckraums zur Gehäuseumgebung erzeugt, verstellbar. Bei dem Verschlussglied kann es sich bspw. um eine Verschlussschraube handeln.

Weitere Vorteile und Ausgestaltungen der Erfindung ergeben sich aus den Unteransprüchen, der Beschreibung und der beiliegenden Zeichnung.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

Figur 1 zeigt ein Hydraulikgebersystem mit erfindungsgemäßer Hydraulikarmatur in perspektivischer Ansicht.
Figur 2 zeigt das Hydraulikgebersystem der Figur 1 in Draufsicht.
Figur 3 zeigt eine Schnittansicht der Hydraulikarmatur gemäß der Schnittlinie A-A der Figur 2 in Betriebsstellung bzw. Schließstellung.
Figur 4 zeigt die Hydraulikarmatur in der Schnittansicht der Figur 3 in der erfindungsgemäßen Zwischenstellung zur Schnellentlüftung.
Figur 5 zeigt die Hydraulikarmatur in der Schnittansicht der Figur 3 in vollständig geöffneter Entlüftungsstellung.
Figur 6 zeigt, in stark schematischer Prinzipskizze, eine Ausgestaltung der Erfindung mit einem einzelnen Verschlussglied für sowohl die Entlüftungsbohrung als auch die Verbindungspassage bei einer direkten Verbindung zwischen Druckraum und Fluidreservoir.
Figur 7 zeigt stark schematisch eine andere Ausgestaltung der Erfindung mit einem Verschlussglied für die Entlüftungsbohrung und einem Verschlusselement für die Verbindungspassage.
Figur 8 zeigt stark schematisch eine weitere Variante der erfindungsgemäßen Hydraulikarmatur mit einem Verschlussglied für die Entlüftungsbohrung und einem Verschlusselement für die Verbindungspassage.
Figur 9 stark schematisch noch eine weitere Variante der erfindungsgemäßen Hydraulikarmatur mit einem Verschlussglied für die Entlüftungsbohrung und einem Verschlusselement für die Verbindungspassage.
Figur 10 zeigt eine Variante der erfindungsgemäßen Hydraulikarmatur mit zwei Entlüftungsbohrungen und entsprechenden Verschlussgliedern und einer Verbindungspassage mit Verschlusselement.

### Ausführliche Beschreibung

Gleiche und ähnliche in den einzelnen Figuren dargestellte Merkmale sind mit gleichen Bezugszeichen bezeichnet.

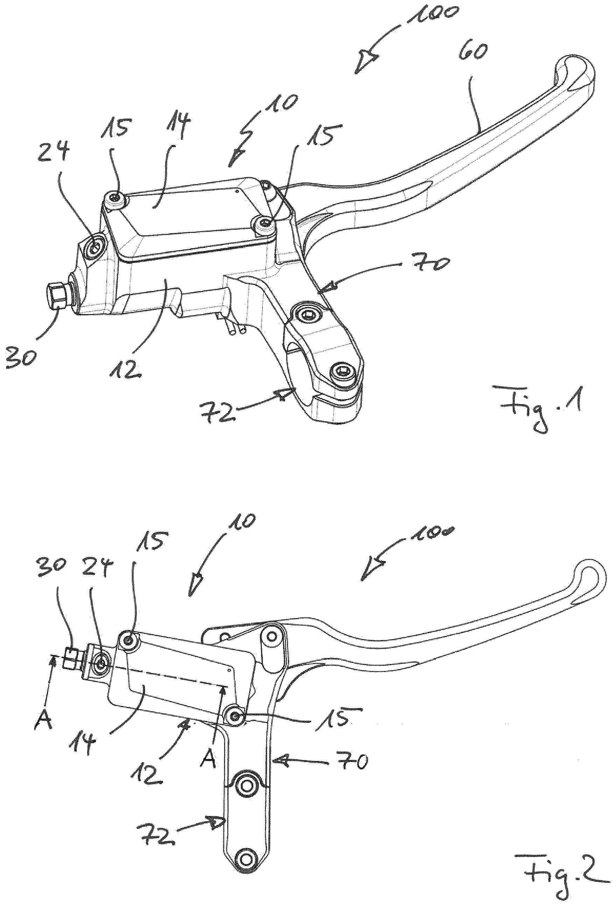

Figur 1 zeigt ein Hydraulikgebersystem 100 mit einer erfindungsgemäßen Hydraulikarmatur 10 in perspektivischer Ansicht, und Figur 2 zeigt das Hydraulikgebersystem 100 der Figur 1 in Draufsicht.

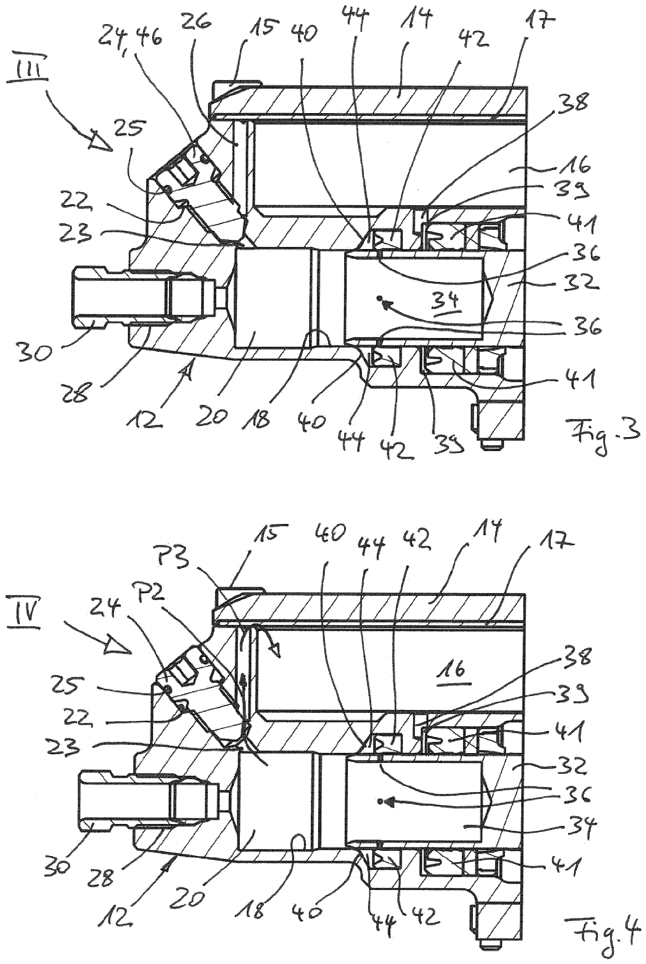

Die Hydraulikarmatur 10 umfasst einen ein Gehäuse 12 bildenden Grundkörper, in dem die einzelnen Elemente des erfindungsgemäßen Hydraulikbremssystems ausgebildet sind, wie nachstehend unter Bezugnahme auf die Figuren 3 bis 5 weiter beschrieben ist.

An dem Grundkörper ist zudem ein Befestigungsabschnitt 70 ausgebildet, mittels welchem eine Befestigung der Hydraulikarmatur 10 bspw. an einem Lenker eines Fahrrads oder anderen lenkergeführten Fahrzeugs möglich ist. Die Befestigung kann in an sich bekannter Art und Weise erfolgen, wie in dem dargestellten Ausführungsbeispiel dargestellt bspw. mittels einer Schellenanordnung 72.

Des weiteren umfasst das Hydraulikgebersystem 100 einen an der Hydraulikarmatur 10 angelenkten Betätigungshebel 60, wie bspw. Einen Bremshebel, mittels welchem eine Betätigung des Systems wie nachfolgend noch beschrieben erfolgen kann.

Insbesondere sind in dem Gehäuse 12 ein ein Fluidreservoir 16 bildender Hohlraum sowie eine Zylinderbohrung 18 ausgebildet (vgl. Figuren 3 bis 5). Das Fluidreservoir 16 ist durch ein mittels Schrauben 15 an dem Gehäuse 12 befestigten Abdeckelement 14 zu einer Gehäuseumgebung hin verschlossen. Zwischen dem Abdeckelement 14 und dem Fluidreservoir 16 ist in an sich bekannter Art und Weise eine Membran 17 zu Zwecken eines Druckausgleichs in dem Hydrauliksystem eingebracht.

In der Zylinderbohrung 18 ist ein Kolben 32 axial verschiebbar angeordnet und in an sich bekannter Art und Weise mit dem Betätigungshebel 60 wirkverbunden. Die Zylinderbohrung 18 umgrenzt einen mit Hydraulikfluid, wie bspw. Bremsfluid, gefüllten Hohlraum 20. Der Kolben 32 weist einen in Richtung des Hohlraums 20 offenen Kolbenhohlraum 34 auf. Der Kolbenhohlraum 34 dient in an sich bekannter Art und Weise zur Aufnahme einer (in den Figuren aus Gründen der Übersichtlichkeit nicht dargestellten) Rückstellfeder, die sich an einer dem Kolben 32 gegenüberliegenden Wandung 19 der Zylinderbohrung 18 abstützt.

An einem dem Kolben 32 gegenüberliegenden Ende der Zylinderbohrung 18, bspw. wie dargestellt an der Wandung 19, mündet die Zylinderbohrung 18 in eine Leitungsanschlussbohrung 28 zum Anschließen der Hydraulikarmatur 10 an eine (nicht dargestellte) Fluidleitung, wie bspw. eine Brems- oder eine Kupplungsleitung. Hierfür kann wie aus den Figuren ersichtlich ein Leitungsanschlussglied 30 in die Leitungsanschlussbohrung 28 eingesetzt sein. Die Leitungsanschlussbohrung 28 kann aber auch an anderer geeigneter Stelle in dem Gehäuse 12 in die Zylinderbohrung 18 mündend ausgebildet sein.

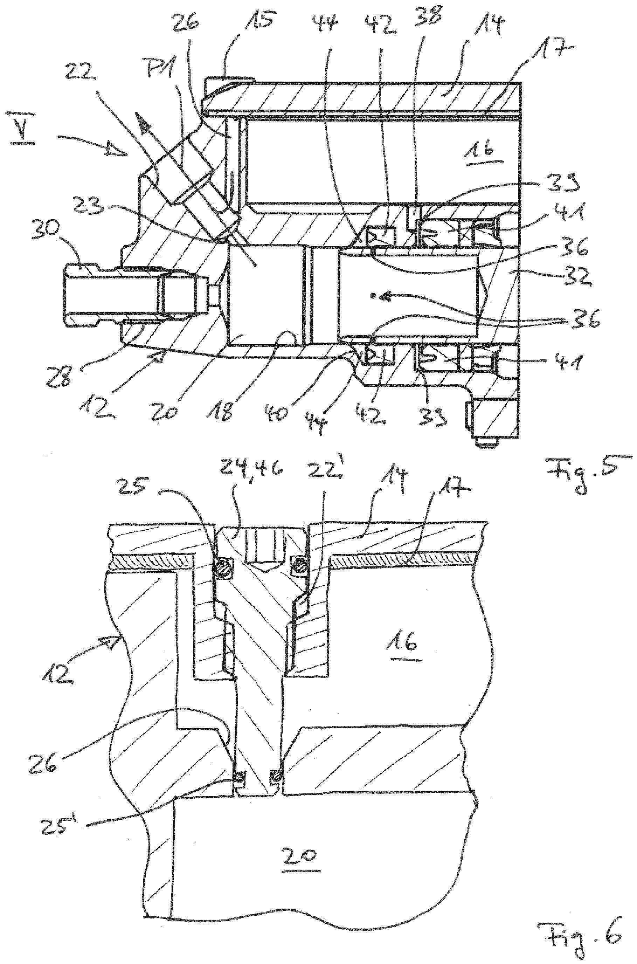

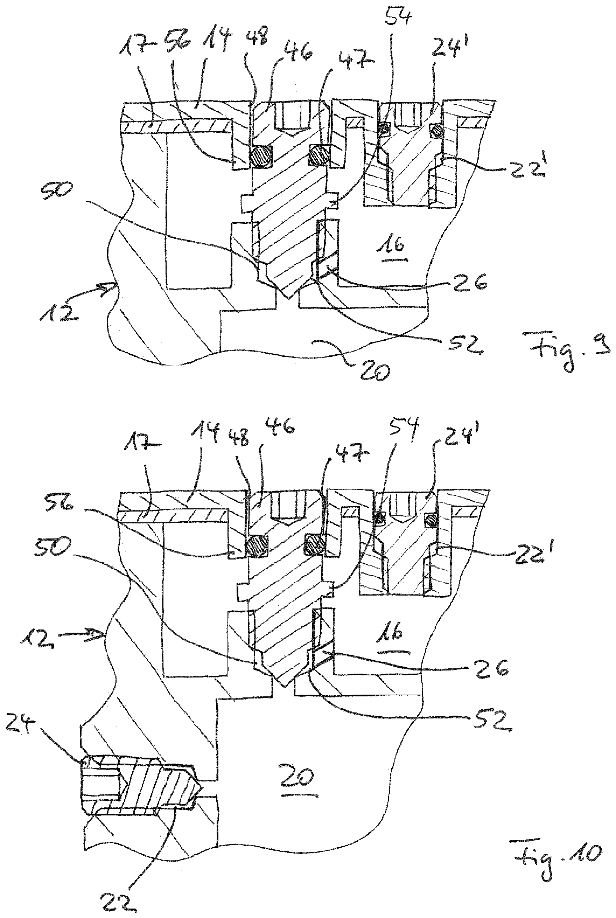

In dem Grundkörper des Gehäuses 12 ist außerdem eine Entlüftungsbohrung 22 ausgebildet, die mit einem Mündungsabschnitt 23 in den Druckraum 20 der Zylinderbohrung 18 mündet. Die Entlüftungsbohrung 22 stellt eine Verbindung des Druckraums 20 mit der Gehäuseumgebung her, wie dies in der Offenstellung bzw. Entlüftungsstellung V der Figur 5 durch den Pfeil P1 veranschaulicht ist. In dem dargestellten Ausführungsbeispiel stellt die Entlüftungsbohrung 22 eine direkte Verbindung des Druckraums 20 mit der Gehäuseumgebung her, es sind jedoch auch Ausgestaltungen mit einer indirekten Verbindung möglich, wie sie bspw. in Zusammenhang mit den Ausführungsbeispielen der Figuren 6 und 9 dargestellt und nachstehend beschrieben ist.

Im Betrieb ist die Entlüftungsbohrung 22 mittels eines Verschlussglieds 24 mit O-Ring/Dichtungsring 25 in an sich bekannter Art und Weise verschlossen, wie dies in Figur 3 dargestellt ist. In dieser Schließstellung bzw. Betriebsstellung III liegt ein geschlossenes Hydrauliksystem vor. Das Verschlussglied 24 kann wie in dem dargestellten Ausführungsbeispiel bspw. als Verschlussschraube ausgebildet sein, die in ein entsprechend vorgesehenes Innengewinde der Entlüftungsbohrung 22 eingeschraubt werden kann. Andere Möglichkeiten der Ausgestaltung, wie bspw. als Verschlussstopfen o.dgl., erschließen sich dem Fachmann ohne weiteres.

Ein Bestandteil des dargestellten Hydrauliksystems ist eine ebenfalls an sich bekannte Fluidverbindung zwischen der Zylinderbohrung 18 (und somit dem Druckraum 20) und dem Fluidreservoir 16. Hierfür ist bspw. eine Versorgungsbohrung 38 vorgesehen, die das Fluidreservoir 16 mit einem in der Zylinderbohrung 18 ausgebildeten Ringkanal 39 verbindet. Über die Versorgungsbohrung 38 und den Ringkanal 39 gelangt somit Fluid aus dem Fluidreservoir 16 in die Zylinderbohrung 18. In dem dargestellten Ausführungsbeispiel befindet sich der Kolben 32 in dem Bereich des Ringkanals 39, so dass aus der Versorgungsbohrung 38 nachfließendes Fluid auf eine Außenwandung des Kolbens 32 trifft und zwischen dieser und einer Innenwandung der Zylinderbohrung 18 eingebracht wird. Das Fluid bildet somit auch einen Gleitfilm für die Kolbenbewegung. In den Ringkanal 39 kann - wie dargestellt - eine Dichtung 41 eingesetzt sein.

Aus dem Fluidreservoir 16 nachfließendes Fluid fließt gemäß dem dargestellten Ausführungsbeispiel über eine oder mehrere über den Umfang des Kolbens 32 verteilte Bohrungen 36, sogenannte Schnüffelbohrungen, in den druckraumseitig offenen Kolbenhohlraum 34.

Stromabwärts des Nachversorgungsfluidflusses durch die Versorgungsbohrung 38 und den Ringkanal 39 kann wie dargestellt in der Zylinderbohrung 18 eine Ringnut 40 vorgesehen sein, die eine weitere Dichtung 42 aufnimmt. Ein verbleibender Hohlraum neben der weiteren Dichtung 42 bildet ein umlaufendes Sackloch 44. Andere Ausgestaltungen der Fluidverbindung zwischen dem Fluidreservoir 16 und dem Druckraum 20 sind möglich. So kann bspw. alternativ zu der beschriebenen Ausgestaltung mit einer stehenden Dichtung 42 und den Schnüffelbohrungen 36 in dem Kolben 32 eine gegenüber der Zylinderbohrung bewegliche Dichtung auf dem Kolben vorgesehen sein, die während der Hubbewegung eine oder mehrere in der Zylinderwandung vorgesehene und den Druckraum mit dem Fluidreservoir verbindende Versorgungsbohrungen überstreicht (Prinzip der kinematischen Umkehr).

Erfindungsgemäß ist eine weitere, temporär öffenbare Fluidverbindung zwischen der Zylinderbohrung 18 und die Fluidreservoir 16 vorgesehen. In dem dargestellten Ausführungsbeispiel umfasst die Fluidverbindung eine Verbindungspassage 26, die das Fluidreservoir 16 über die Entlüftungsbohrung 22 mit dem Druckraum 20 verbindet. Hierzu mündet die Verbindungspassage 26 etwas oberhalb eines die Entlüftungsbohrung 22 mit dem Druckraum 20 verbindenden Mündungsabschnitts 23, der das druckraumseitige Ende der Entlüftungsbohrung 22 darstellt.

Wie bereits voranstehend beschrieben, wird die Entlüftungsbohrung 22 in der Betriebsstellung III für den normalen Betrieb vollständig verschlossen. Ebenso ist, wie dies in Figur 3 dargestellt ist, in dieser Betriebsstellung III auch die Verbindung zwischen der Verbindungspassage 26 und dem Druckraum 20 unterbrochen, da das Verschlussglied (bzw. die Verschlussschraube) 24 dichtend bis in den Mündungsabschnitt 23 hineinragt. Das Verschlussglied 24 dient somit gleichzeitig auch als Verschlusselement 46 für die Verbindungspassage 26.

In der Betriebsstellung III wird durch Betätigung des Betätigungshebels 60 eine Bewegung des Kolbens 32 bewirkt, wodurch ein in Richtung der über das Leitungsanschlussglied 30 angeschlossenen (nicht dargestellten) Hydraulikleitung wirkender Hydraulikdruck aufgebaut wird. Im Bedarfsfall (bspw. bei zunehmender Bremsbelagabnutzung im Falle einer Verwendung in einem Bremssystem) kann über die Fluidverbindung der Versorgungsbohrung 38 Fluid aus dem Fluidreservoir 16 nachversorgt werden, wenn der Kolben 32 bei seiner Hubbewegung zurück in die Ruheposition mit seinen Schnüffelbohrungen 36 die weitere Dichtung 41 stromaufwärts überfährt. In dieser Position stehen die Schnüffelbohrungen 36 (und somit auch der Druckraum 20) mit dem Fluidreservoir 16 über die Verbindungsbohrung 38 in Fluidverbindung.

Sollte Luft unerwünscht in das geschlossene Hydrauliksystem gelangen, bietet die Erfindung dem Benutzer die Möglichkeit einer einfachen und unkomplizierten "Schnellentlüftung". Hierfür wird das Verschlussglied 24 etwas gelockert und so in die in der Figur 4 dargestellte Zwischenstellung bzw. Schnellentlüftungsstellung IV gebracht. In dieser Schnellentlüftungsstellung IV wird die in die Entlüftungsbohrung 22 mündende Verbindungspassage 26 freigegeben und somit eine Verbindung über den Mündungsabschnitt 23 der Entlüftungsbohrung 22 zu dem Druckraum 20 hergestellt. Wird nun von dem Benutzer der Betätigungshebel 60 (mehrfach) betätigt und damit eine Kolbenbewegung erzeugt, wird Fluid und darin enthaltene unerwünschte Luft über den Mündungsabschnitt 23 und die Verbindungsbohrung 26 in das Fluidreservoir 16 gedrückt. Unerwünschte Luft kann somit in dem Fluidreservoir 16 gesammelt werden. Die Kolbenbewegung kann mehrfach wiederholt werden, bis das System in dem Druckraum 20 im wesentlichen luftfrei ist (zumindest in einem Maße luftfrei, dass ein unbedenklicher Betrieb stattfinden kann). Anschließend wird das Verschlussglied 24 wieder angezogen und so in die Betriebsstellung III gebracht, so dass die Hydraulikarmatur wieder einsatzbereit ist.

Die erfindungsgemäße Ausgestaltung hat zudem den Vorteil, dass auch Luft, die sich in unerwünschter Weise in dem voranstehend beschriebenen Sackloch 44 neben der weiteren Dichtung 42 gesammelt hat, durch das mehrfache Überstreichen des Sackloches 44 mit den Schnüffelbohrungen 36 während der (mehrfachen) Hin- und der Bewegung des Kolbens 32 ebenfalls mit entfernt und über die zusätzliche Fluidverbindung der Verbindungspassage 26 dem Fluidreservoir 16 zugeführt werden kann.

Die erfindungsgemäße Schnellentlüftung ersetzt eine ordnungsgemäße vollständige Entlüftung des Hydrauliksystems und dessen Auffüllen mit Hydraulikfluid nicht, da die unerwünschte Luft "lediglich" in dem Fluidreservoir 16 "zwischengelagert" ist. Zur ordnungsgemäßen Entlüftung wird in an sich bekannter Art und Weise das Verschlussglied 24 vollständig entfernt (wie dies in der Figur 5 dargestellt ist) oder zumindest so geöffnet, dass eine Verbindung des Druckraums 20 zur Gehäuseumgebung hergestellt wird (dem Fachmann sind bspw. Verschlussglieder mit einer zentralen durchgehenden und bei Bedarf öffenbaren Bohrung bekannt). In der Entlüftungsstellung V des in der Figur 5 dargestellten Ausführungsbeispieles kann ein Entlüftungswerkzeug mit einem entsprechend geformten Stutzen passgenau in die Entlüftungsbohrung 22 eingesetzt werden und nun das Fluidreservoir und der Druckraum gleichzeitig entlüftet werden.

Die Figuren 6 bis 10 zeigen in stark schematischer Darstellung weitere Varianten der erfindungsgemäßen Hydraulikarmatur, wobei gleiche bzw. vergleichbare Elemente mit den gleichen Bezugszeichen bezeichnet sind. Die Figuren 6 bis 10 zeigen nur einen stark schematischen Ausschnitt aus der Darstellung der Figuren 3 bis 5; selbstverständlich sind auch die nicht dargestellten weiteren Elemente, wie sie im Zusammenhang mit den Figuren 2 bis 5 dargestellt und beschrieben wurden, wie insb. der Kolben 32 und die durch Versorgungsbohrung 38 und Ringkanal 39 gebildete Fluidverbindung auch Bestandteil der in die Figuren 6 bis 10 gezeigten Varianten.

Figur 6 zeigt eine Ausgestaltung mit einer direkten Verbindung zwischen dem Druckraum 20 und dem Fluidreservoir 16, d.h. die Verbindungspassage 26 ist direkt zwischen dem Fluidreservoir 16 und dem Druckraum 20 ausgebildet. In dem dargestellten Ausführungsbeispiel der Figur 6 ist die Entlüftungsbohrung 22' fluchtend mit der Verbindungspassage 26 in dem Abdeckelement 14 des Fluidreservoirs 16 ausgebildet und verbindet mithin den Druckraum 20 indirekt über das Fluidreservoir 16 mit der Gehäuseumgebung. Das Verschlussglied 24 ist derart verlängert, dass es durch das Fluidreservoir 16 hindurch bis in die Verbindungspassage 26 reicht und diese in der (dargestellten) Schließstellung mittels eines an dem Verschlussglied 24 angeordneten O-Ring 25' dichtend verschließt. Das Verschlussglied 24 dient somit gleichzeitig auch als Verschlusselement 46 für die Verbindungspassage 26.

Zur Herstellung der erfindungsgemäßen Zwischenstellung zu Zwecken der Schnellentlüftung wird das Verschlussglied so weit gelockert, dass die Fluidverbindung zwischen dem Fluidreservoir 16 und dem Druckraum 20 freigegeben wird. Für die Herstellung der Entlüftungsstellung wird das Verschlussglied 24 vollständig entfernt und das System kann dann über die offene Verbindung zu dem Druckraum 20 über die Verbindungspassage 26 vollständig entlüftet werden.

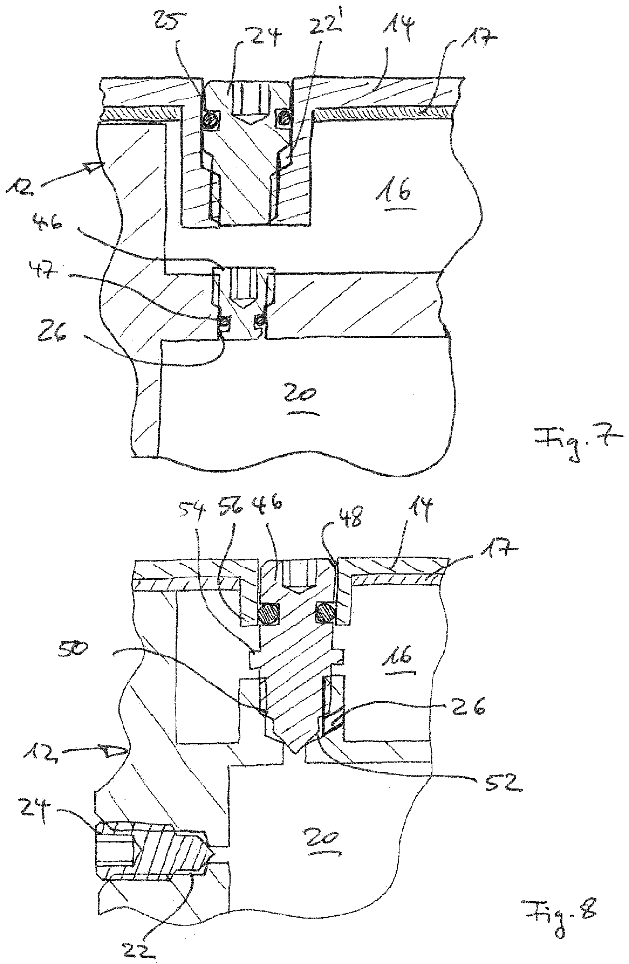

Figur 7 zeigt eine vom Grundaufbau dem Ausführungsbeispiel der Figur 6 ähnliche Variante, bei der ebenfalls die Entlüftungsbohrung 22 und die Verbindungspassage 26 fluchtend zueinander ausgebildet sind. Der Unterschied besteht darin, dass das Verschlussglied 24 und das Verschlusselement 46 separat voneinander ausgebildet sind. Um eine erfindungsgemäße Schnellentlüftung vornehmen zu können, wird zunächst das Verschlussglied 24 der Entlüftungsbohrung 22 vollständig entfernt. Anschließend wird das die Verbindungspassage 26 mittels einem O-Ring 47 verschließende Verschlusselement 46 so weit gelockert, bis eine Fluidverbindung zwischen dem Fluidreservoir 16 und dem Druckraum 20 freigegeben ist. Vorzugsweise wird dann die Entlüftungsbohrung 22 wieder verschlossen, bevor durch (mehrmaliges) Betätigen des Betätigungshebels 60 die erfindungsgemäße Schnellentlüftung durchgeführt wird. Die übliche Entlüftung kann bei herausgenommenem Verschlussglied 24 erfolgen.

Figur 8 zeigt eine Ausgestaltung, bei der in an sich ähnlicher Weise zu der Ausführungsform der Figur 6 ein Verschlusselement 46 durch eine dazu vorgesehene Öffnung 48 in dem Abdeckelement durch das Fluidreservoir 16 hindurch dichtend in eine fluchtend zu der Öffnung 48 ausgebildete Bohrung 50 eingreift. Zusätzlich ist in dem Gehäuse 12 eine Entlüftungsbohrung 22 vorgesehen, die den Druckraum direkt und unabhängig von der Verbindungspassage mit der Gehäuseumgebung verbindet. In der dargestellten Betriebsstellung ist die Entlüftungsbohrung 22 wie bekannt und beschrieben durch ein geeignetes Verschlussglied 24 verschlossen. Zur Herstellung der erfindungsgemäßen Zwischenstellung zu Zwecken der Schnellentlüftung wird das Verschlusselement 46 so weit gelockert (bspw. bis das Verschlusselement 46 mit einem dazu vorgesehenen abkragenden Anschlagselement 54 an einen entsprechend an dem Abdeckelement 14 ausgebildeten Gegenanschlag 56 zum Anliegen kommt), dass die Fluidverbindung zwischen dem Fluidreservoir 16 und dem Druckraum 20 freigegeben wird. Hierfür kann die Verbindungspassage 26 - wie dargestellt - quer von dem Fluidreservoir 16 in einen unteren, druckraumseitigen Bereich 52 der fluchtenden Bohrung 50 münden. Alternativ können Verschlusselement und Bohrung auch so ausgestaltet sein, dass die fluchtende Bohrung die Funktion der Verbindungspassage übernimmt.

Für die Herstellung der Entlüftungsstellung wird das Verschlussglied 24 vollständig entfernt und das System kann dann über die offene Verbindung zu dem Druckraum 20 vollständig entlüftet werden. Zum Entlüften kann die Verbindungspassage 26 wahlweise geschlossen oder geöffnet sein. Ein Entlüften ist über die durch die Versorgungsbohrung 38 und den Ringkanal 39 wie voranstehend beschrieben bestehende Fluidverbindung möglich, wird aber durch ein Öffnen der Verbindungspassage 26 erleichtert, was auch insofern einen Vorteil der Erfindung darstellt.

Figur 9 zeigt eine Ausgestaltung mit entsprechend der Ausführungsform der Figur 8 dargestellter und beschriebener Verbindungspassage 26, Verschlusselement 46 und fluchtender Bohrung 50, aber mit einer in das Abdeckelement 14 eingebrachten Entlüftungsbohrung 22` und darin eingesetztem Verschlussglied 24`. In dieser Variante wird die Verbindung zur Gehäuseumgebung somit über das Fluidreservoir 16 hergestellt, mithin eine indirekte Verbindung des Druckraums 20 zur Gehäuseumgebung. Zur Entlüftung bietet es sich an, neben einem Herausdrehen/Entfernen des Verschlussglieds 24' auch das Verschlusselement 46 zu lockern, um die Verbindungspassage 26 zum Druckraum 20 freizugeben.

Die Ausgestaltung der Figur 10 schließlich stellt eine Kombination der beiden in den Figuren 8 bzw. 9 gezeigten Varianten dar. Hier ist ein Entlüften über die Entlüftungsbohrung 22 zum Druckraum 20 und/oder die Entlüftungsbohrung 22' zum Fluidreservoir 16 möglich. Das Entlüften wird durch Öffnen des Verschlusselements 46, also Öffnen der Verbindungspassage zur Herstellung der erfindungsgemäßen zusätzlichen Fluidverbindung erleichtert.

Es ist nochmals zu betonen, dass die Entlüftungsbohrung nicht notwendigerweise eine direkte Verbindung des Druckraums zur Gehäuseumgebung bereitstellen muss, sondern dass ein Entlüften des Systems aufgrund der konventionell bestehenden Fluidverbindung und erleichtert durch die erfindungsgemäße zusätzliche Fluidverbindung auch mit einer eine indirekte Verbindung des Druckraums mit der Gehäuseumgebung realisierenden Entlüftungsbohrung möglich ist.

Die Erfindung ist in allen Hydrauliksystemen einsetzbar, bei denen ein Bedarf an einer erfindungsgemäßen Schnellentlüftung besteht. Insbesondere kann die Erfindung für lenkergeführte Fahrzeuge wie Fahrräder, Motorräder u.dgl. eingesetzt werden, wie bspw. in offenen oder geschlossenen Hydraulikbremssystem oder Hydraulikkupplungssystemen. Andere als die beschriebenen Einsatzbereiche sind möglich. Dem Fachmann erschließen sich andere als die explizit erläuterten Ausgestaltungsgeometrien im Rahmen des in den Patentansprüchen definierten Erfindungsprinzips ohne weiteres.

### Bezugszeichenliste

- 10: Hydraulikarmatur
- 12: Gehäuse
- 14: Abdeckelement
- 15: Schrauben
- 16: Fluidreservoir
- 17: Membran
- 18: Zylinderbohrung
- 19: Wandung
- 20: Druckraum
- 22: Entlüftungsbohrung zum Druckraum
- 22`: Entlüftungsbohrung zum Fluidreservoir
- 23: Mündungsabschnitt
- 24: Verschlussglied, Verschlussschraube
- 24': Verschlussglied, Verschlussschraube
- 25: O-Ring
- 25': O-Ring
- 26: Verbindungspassage
- 28: Leitungsanschlussbohrung
- 30: Leitungsanschlussglied
- 32: Kolben
- 34: Kolbenhohlraum
- 36: Bohrungen, Schnüffelbohrungen
- 38: Versorgungsbohrung
- 39: Ringkanal
- 40: Ringnut
- 41: Dichtung
- 42: weitere Dichtung
- 44: Sackloch#
- 46: Verschlusselement
- 47: O-Ring
- 48: Öffnung
- 50: fluchtende Bohrung
- 52: unterer Bereich
- 54: Anschlagselement
- 60: Betätigungshebel, Bremshebel
- 70: Befestigungsabschnitt
- 72: Schellenanordnung
- 100: Hydraulikgebersystem

- P1: Pfeil
- P2: Pfeil
- P3: Pfeil

- III: Schließstellung bzw. Betriebsstellung
- IV: Zwischenstellung bzw. Schnellentlüftungsstellung
- V: Offenstellung bzw. Entlüftungsstellung

## Patentansprüche

1. Hydraulikarmatur (10) für ein Hydraulikgebersystem (100), mit einem Gehäuse (12), in dem ein Fluidreservoir (16), ein mit dem Fluidreservoir (16) in Fluidverbindung stehender Druckraum (20) und eine den Druckraum (20) mit einer Gehäuseumgebung verbindende Entlüftungsbohrung (22, 22') ausgebildet sind,
wobei die Entlüftungsbohrung (22, 22') im Betrieb in einer Schließstellung (III) verschließbar und zur Herstellung einer Entlüftungsstellung (V) öffenbar ist,
mit des weiteren einer zusätzlichen Fluidverbindung zwischen dem Fluidreservoir (16) und dem Druckraum (20), die während des Betriebs unterbrochen ist,
**dadurch gekennzeichnet, dass** die zusätzliche Fluidverbindung zwischen dem Fluidreservoir (16) und dem Druckraum (20) zur Ermöglichung einer Schnellentlüftung in einer Schnellentlüftungsstellung (IV) temporär öffenbar ist, während die Entlüftungsbohrung (22) verschlossen bleibt.

2. Hydraulikarmatur (10) nach Anspruch 1, die eine den Druckraum (20) umgrenzende Zylinderbohrung (18) aufweist, in der ein Kolben (32) verschiebbar geführt ist.

3. Hydraulikarmatur (10) nach Anspruch 2, bei der die Fluidverbindung eine das Fluidreservoir (16) mit einem Ringkanal (39) der Zylinderbohrung (18) verbindende Versorgungsbohrung (38) umfasst.

4. Hydraulikarmatur (10) nach Anspruch 2 oder 3, bei der in dem Kolben (32) eine oder mehrere über einen Umfang des Kolbens (32) verteilte, in einen druckraumseitig offenen Kolbenhohlraum (34) mündende Bohrungen (36) vorgesehen sind.

5. Hydraulikarmatur (10) nach einem der Ansprüche 1 bis 4, bei der ein in die Entlüftungsbohrung (22, 22') einzusetzendes Verschlussglied (24, 24') die Entlüftungsbohrung (22, 22') im Betrieb in der Schließstellung (III) verschließt und zur Herstellung der Entlüftungsstellung (V) entfernbar bzw. öffenbar ist, wobei das Verschlussglied (24, 24') bspw. eine Verschlussschraube ist.

6. Hydraulikarmatur (10) nach einem der voranstehenden Ansprüche, bei der die zusätzliche Fluidverbindung eine Verbindungspassage (26) zwischen dem Fluidreservoir (16) und dem Druckraum (20) umfasst.

7. Hydraulikarmatur (10) nach Anspruch 6, bei der ein von außen betätigbares Verschlusselement (46) vorgesehen ist, das die Verbindungspassage (26) im Betrieb unterbricht und zur Herstellung der Schnellentlüftungsstellung (IV) temporär freigibt.

8. Hydraulikarmatur (10) nach Anspruch 7, deren Verbindungspassage (26) das Fluidreservoir (16) und den Druckraum (20) direkt verbindet.

9. Hydraulikarmatur (10) nach Anspruch 5 und 7, bei der das Verschlusselement (46) das Verschlussglied (24) der Entlüftungsbohrung (22) ist.

10. Hydraulikarmatur (10) nach Anspruch 6, deren Verbindungspassage (26) das Fluidreservoir (16) und den Druckraum (20) über die Entlüftungsbohrung (22) verbindet, derart dass in der Schließstellung (III) des Verschlussgliedes (24) keine Verbindung der Verbindungspassage (26) mit dem Druckraum (20) besteht und dass in einer Zwischenstellung des Verschlussgliedes (24) zur Ermöglichung der Schnellentlüftung die zusätzliche Fluidverbindung zwischen dem Fluidreservoir (16) und dem Druckraum (20) über die Verbindungspassage (26) und die Entlüftungsbohrung (22) ohne Verbindung zur Gehäuseumgebung freigegeben ist.

11. Hydraulikgebersystem (100) mit einer Hydraulikarmatur (10) nach einem der Ansprüche 1 bis 10 und einem in Wirkverbindung mit der Hydraulikarmatur (10) angeordneten Betägigungshebel (60).

## Claims

1. Hydraulic fitting (10) for a hydraulic transmitter system (100) having a housing (12) in which a fluid reservoir (16), a pressure chamber (20) which is fluidically connected to the fluid reservoir (16) and a venting bore (22, 22') which connects the pressure chamber (20) to a housing surroundings are configured,
wherein the venting bore (22, 22') can be closed in a closed position (III) during operation and can be opened to produce a venting position (V),
also having an additional fluid connection between the fluid reservoir (16) and the pressure chamber (20) which is interrupted during operation,
**characterized in that** the additional fluid connection between the fluid reservoir (16) and the pressure chamber (20) can be temporarily opened to permit rapid venting in a rapid venting position (IV) while the venting bore (22) remains closed.

2. Hydraulic fitting (10) according to Claim 1, which has a cylinder bore (18) which surrounds the pressure chamber (20) and in which a piston (32) is displaceably guided.

3. Hydraulic fitting (10) according to Claim 2, in which the fluid connection comprises a supply bore (38) connecting the fluid reservoir (16) to an annular channel (39) of the cylinder bore (18).

4. Hydraulic fitting (10) according to Claim 2 or 3, in which one or more bores (36) are provided in the piston (32), the bores being distributed over a circumference of the piston (32) and feeding into a piston cavity (34) which is open on the pressure chamber side.

5. Hydraulic fitting (10) according to one of Claims 1 to 4, in which a closure member (24, 24') to be inserted into the venting bore (22, 22') closes the venting bore (22, 22') in the closed position (III) during operation and can be removed or opened to produce the venting position (V), wherein the closure member (24, 24') is, for example, a screw plug.

6. Hydraulic fitting (10) according to one of the preceding claims, in which the additional fluid connection comprises a connecting passage (26) between the fluid reservoir (16) and the pressure chamber (20).

7. Hydraulic fitting (10) according to Claim 6, in which a closure element (46) which can be actuated from outside is provided, the closure element interrupting the connecting passage (26) during operation and temporarily opening up the connecting passage to produce the rapid venting position (IV).

8. Hydraulic fitting (10) according to Claim 7, the connecting passage (26) thereof directly connecting the fluid reservoir (16) and the pressure chamber (20).

9. Hydraulic fitting (10) according to Claim 5 and 7, in which the closure element (46) is the closure member (24) of the venting bore (22).

10. Hydraulic fitting (10) according to Claim 6, the connecting passage (26) thereof connecting the fluid reservoir (16) and the pressure chamber (20) via the venting bore (22) such that in the closed position (III) of the closure member (24) no connection is present between the connecting passage (26) and the pressure chamber (20) and in that, in an intermediate position of the closure member (24) to permit the rapid venting, the additional fluid connection between the fluid reservoir (16) and the pressure chamber (20) via the connecting passage (26) and the venting bore (22) is opened up without being connected to the housing surroundings.

11. Hydraulic transmitter system (100) having a hydraulic fitting (10) according to one of Claims 1 to 10 and an actuating lever (60) which is arranged so as to be operatively connected to the hydraulic fitting (10) .

## Revendications

1. Armature hydraulique (10) pour un système émetteur hydraulique (100), comprenant un boîtier (12) dans lequel sont conçus un réservoir à fluide (16), une chambre sous pression (20) en connexion fluidique avec le réservoir à fluide (16), et un perçage de purge (22, 22') connectant la chambre sous pression (20) à un environnement de boîtier,
dans laquelle le perçage de purge (22, 22') en fonctionnement peut être fermé dans une position de fermeture (III) et peut être ouvert pour produire une position de purge (V),
comprenant en outre une connexion fluidique supplémentaire entre le réservoir à fluide (16) et la chambre sous pression (20), qui est interrompue pendant le fonctionnement,
**caractérisée en ce que** la connexion fluidique supplémentaire entre le réservoir à fluide (16) et la chambre sous pression (20) peut être ouverte temporairement afin de permettre une purge rapide dans une position de purge rapide (IV) tandis que le perçage de purge (22) reste fermé.

2. Armature hydraulique (10) selon la revendication 1, qui présente un perçage de cylindre (18) délimitant la chambre sous pression (20), dans laquelle un piston (32) est guidé de manière déplaçable.

3. Armature hydraulique (10) selon la revendication 2, dans laquelle la connexion fluidique comprend un perçage d'alimentation (38) reliant le réservoir à fluide (16) à un canal annulaire (39) du perçage de cylindre (18).

4. Armature hydraulique (10) selon la revendication 2 ou 3, dans laquelle il est prévu dans le piston (32) un ou plusieurs perçages (36) répartis sur une circonférence du piston (32) et aboutissant dans une cavité de piston (34) ouverte côté chambre sous pression.

5. Armature hydraulique (10) selon l'une des revendications 1 à 4, dans laquelle un organe de fermeture (24, 24') devant être inséré dans le perçage de purge (22, 22') ferme le perçage de purge (22, 22') en fonctionnement dans la position de fermeture (III) et peut être retiré ou ouvert pour produire la position de purge (V), l'organe de fermeture (24, 24') étant par exemple une vis de fermeture.

6. Armature hydraulique (10) selon l'une quelconque des revendications précédentes, dans laquelle la connexion fluidique supplémentaire comprend un passage de connexion (26) entre le réservoir à fluide (16) et la chambre sous pression (20).

7. Armature hydraulique (10) selon la revendication 6, dans laquelle il est prévu un élément de fermeture (46) pouvant être actionné depuis l'extérieur, qui interrompt le passage de connexion (26) en fonctionnement et qui le libère temporairement pour produire la position de purge rapide (IV).

8. Armature hydraulique (10) selon la revendication 7, dont le passage de connexion (26) connecte directement le réservoir à fluide (16) et la chambre sous pression (20).

9. Armature hydraulique (10) selon les revendications 5 et 7, dans laquelle l'élément de fermeture (46) est l'organe de fermeture (24) du perçage de purge (22).

10. Armature hydraulique (10) selon la revendication 6, dont le passage de connexion (26) connecte le réservoir à fluide (16) et la chambre sous pression (20) par l'intermédiaire du perçage de purge (22), de telle sorte que, dans la position de fermeture (III) de l'organe de fermeture (24), il n'y aucune connexion du passage de connexion (26) avec la chambre sous pression (20), et que, dans une position intermédiaire de l'organe de fermeture (24) pour permettre la purge rapide, la connexion fluidique supplémentaire entre le réservoir à fluide (16) et la chambre sous pression (20) est libérée par l'intermédiaire du passage de connexion (26) et du perçage de purge (22) sans connexion à l'environnement de boîtier.

11. Système émetteur hydraulique (100) comprenant une armature hydraulique (10) selon l'une quelconque des revendications 1 à 10 et un levier d'actionnement (60) agencé en connexion fonctionnelle avec l'armature hydraulique (10).
